# EUROPEAN PATENT SPECIFICATION

(11) **EP 1 733 584 B1**
(45) Date of publication and mention of the grant of the patent: **06.03.2013**
(21) Application number: 03782384.6
(22) Date of filing: 12.12.2003
(51) Int. Cl.: H04W 36/22

(54) **Method and device for handling user equipment in a communications network**
Methode und Gerät zur Handhabung von Benutzergeräten in einem Kommunikationsnetzwerk
Procédé et dispositif de gestion d'un équipement utilisateur dans un réseau de communications

(43) Date of publication of application: 20.12.2006
(73) Proprietor: Telefonaktiebolaget LM Ericsson (publ), 126 25 Stockholm (SE)
(72) Inventor: YAMEN, Soner, 52134 Herzogenrath (DE)
(74) Representative: Tonscheidt, Andreas
(86) International application number: PCT/EP2003/014143
(87) International publication number: WO 2005/060296

(56) References cited:
- EP-A- 1 257 141
- WO-A-01/35585
- US-A1- 2002 177 466

## Description

### Technical field

The present invention relates to a method for handling user equipment in a telecommunications network with two different access networks, wherein user equipment is capable of being served by both of the networks and wherein the access networks provide at least one service with a different quality.

### Related art

Nowadays, user equipment is developed, that is capable of connecting to at least two access networks, a so-called dual mode terminal. Such dual mode terminal is capable of connecting to for example so-called 2G networks like GSM (Global System for Mobile communication), D-AMPS (Digital Advanced Mobile Phone System) or PDC (Pacific Digital Cellular) and so-called 3G networks like UTRAN (UMTS [Universal Mobile Telecommunications System] Terrestrial Radio Access Network. A UTRAN can be implemented for example according to WCDMA (Wideband Code Division Multiple Access), CDMA (Code Division Multiple Access), or EDGE Enhanced Data rates for GSM Evolution.

For operators providing telecommunication services, it is interesting whether to offer services via a 2G or a 3G system to a subscriber using such equipment. In the following the words terminal and user equipment are used as synonyms. To provide the best possible service to the highest number of subscribers, or in order to reduce cost, some mechanisms have been developed.

A first mechanism is the so-called camp on WCDMA mechanism, wherein WCDMA stands as an example for the described 3G access technologies. At the camp on WCDMA, a 3G and a 2G access network are configured to direct dual mode terminals to WCDMA coverage, as long as a terminal is in a so-called Idle Mode, as soon as WCDMA Coverage quality is good enough for 3G services. In an idle mode, a terminal can be activated for a telecommunications service but is currently not actively delivering such service. Camp on WCDMA thus means that once access networks are configured that way, all dual mode terminals will be directed to WCDMA coverage in Idle Mode.

Partial Roaming can be used to further regulate the Idle Mode load distribution based on IMSI and/or subscription information.

To reduce 3G load, a mechanism called Move Speech Calls to GSM access has been developed. Like WCDMA above, GSM is just one example of a 2G access technology. At that mechanism, a dual mode terminal, being in Idle mode and served by a 3G access network, receiving a speech call is transferred to a 2G access network for operating the call. In general Service and Load based handovers can be used to balance the load based on access network load and requested service in Connected Mode.

Since Camp on WCDMA directs all Dual Mode terminals to 3G coverage, further mechanisms are required to regulate distribution of dual mode terminals in Idle Mode. One of them is Partial Roaming. When an Operator has same MNC (Mobile Network Code) for WCDMA and GSM, Partial Roaming can be used to reject a 2G only subscriber from 3G access. This will tell the terminal to stay with the same mobile network but change Location Area hence direct this terminal to 2G access of the same Operator. Partial Roaming requires different location area identifier settings for GSM and WCDMA access.

A further mechanism is National Roaming Restriction. When an Operator has different MNCs for 3G and 2G, National Roaming Restriction can be used. When National Roaming Restriction is used, a terminal can select any other mobile network, not necessarily the GSM access of the same Operator, if more 2G networks are available.

Yet another mechanism is Load Based Inter-system Handover. Load Based Intersystem Handover supports intersystem handover of e.g. speech calls based on cell load of current cell and target cell.

Core Network transfers cell load information between 2G access network node and 3 G access network node. Access network takes the handover decision, comparing the Cell Load Information received from target system with the Cell Load Information of own cells.

If for example the 2G access network is operating according to GSM standards and the 3G access network is operating according WCDMA standards, then, in the case that the WCDMA network is loaded and the GSM network has capacity to handle calls, speech calls can be used for load balancing. For example a speech call set up in the WCDMA access network can be handed over to GSM network based on cell load information of the current WCDMA access network cell and the target GSM access network cell.

Speech is a preferred call type that can be used for load balancing, since it is supported with alike quality by both technologies and with its high volume, it will for sure provide load balancing without need to do any complicated CS (Circuit Switched)/PS (Packet Switched) data inter-system handovers.

However, current technology of load based inter-system handover has some drawbacks. If an Operator uses speech calls in a 3G network for load balancing, and a subscriber is handed over to 2G, said subscriber cannot receive high rate packet switched data as long as he is served by the 2G access network. DTM (Dual Transfer Mode) enables simultaneous speech and PS calls in GSM access as well, but with lower rates.

Therefore it is an object of the invention to overcome the drawbacks of prior art.

EP 1 257 141 A1 discloses methods and apparatus for Dynamic System Performance Adaptation (DSPA) and in particular DSPA between uncoordinated radio access networks having different RAT's. The document further discloses a system and a method for operating at least a first and a second mobile telecommunications network connected through at least one common node, a mobile terminal being in radio communication with the first mobile telecommunications network. The mobile terminal scans a frequency spectrum and identifies at least a potential radio access network. The mobile terminal communicates a report of the results of the scan to the first network. The mobile terminal sends a message to the first telecommunications network with a request for specific mobile telecommunications service. The first network decides in response to the report and the request which of the radio networks detected by the scan of the mobile terminal is suitable for the requested service. The first radio network requests the common node to redirect at least a part of the communication to the second network.

### Summary of the invention

The above object will be solved advantageously by the method of claim 1, the device of claim 7, the database of claim 9, and the network node of claim 10.

It is advantageous that a group of preferred user equipment is defined for intersystem handover. This enables to select user equipment for being handed over with lower granularity. Advantageous is the use of a database for storing subscriber data for storing the indication of preferred user equipment. Such database is commonly used to store subscriber related information and therefore an implementation can be done with few adaptations on protocols. Also advantageous is the use of a network node performing an analysis of user identification, as an indication of a preferred user equipment can be implemented by means of selecting certain sequences of user identification for preferred user equipment.

Further advantageous embodiments can be derived from the dependent claims. It is particularly advantageous that user equipment is transferred that is limited it its service capabilities according to claims 3 and 4. As the use equipment is transferred from a first network with higher service capabilities to a second network with lower service capabilities it is advantageous that preferably user equipment with capabilities that are limited to what can be offered by the second network are transferred. By this, a higher amount of services can be offered compared to a case when user equipment with higher service capabilities would have been transferred.

Also advantageous is that user equipment is transferred with higher service capabilities according to claims 5 and 6. If user equipment is transferred form a first network with lower service capabilities to a second network with higher service capabilities, this should be done with user equipment having higher service capabilities. Thus, use equipment with an active call that is transferred is enabled to use further services, which are provided by the second network exclusively.

It is object of the invention to provide a method for handling user equipment in a communications network comprising at least a first access network and a second network for enabling user equipment to access the network and a core network for connecting said user equipment. The access network have at least partially overlapping service areas, and user equipment located in the overlapping part can be transferred from the first to the second access network. The method comprises the following steps, receiving an indication of a request for transferring at least one terminal, checking a transfer permission parameter value associated to a terminal, determining that the transfer permission parameter value indicates that a transfer of the associated user equipment is permitted, initiating the transfer of the terminal from the first to the second access network. The method comprises the step of determining that the user equipment does not belong to a group of user equipment, for which a preferred access network has been defined.

In an embodiment of the method, an access network operates according to the standards defined for of one of a Global System for Mobile Communications, Wideband Code Division Multiple Access, Code Division Multiple Access, and Enhanced Data Rates for Global System for Mobile Communications Evolution.

The group of user equipment for which a preferred access network has been defined can comprise user equipment with service capabilities can be limited to services that correspond to services supported by the second network.

The group of user equipment for which a preferred access network has been defined can comprise user equipment used associated to a subscription with permitted services limited to services that correspond to services supported by the second network.

The group of user equipment for which a preferred access network has been defined can also comprise user equipment used associated to a subscription for that services are permitted that are not supported by the first network.

Furthermore can the group of user equipment for which a preferred access network has been defined comprise user equipment with service capabilities corresponding to services that are not supported by the first network.

The invention is also related to a device for selecting user equipment to be transferred from a first access network to a second access network. Said device comprises an input output unit for sending and receiving messages, a processing unit for controlling the other units, a storage, and a determining unit for determining whether a transmission of a user equipment is permitted. The logical unit is adapted to determine whether a user equipment belongs to a group of user equipment, for which a preferred access network has been defined.

The device can comprise a logical unit that determines whether a user equipment belongs to said group by means of analysing a transfer permission parameter value associated to the user equipment.

It is also object of the invention to provide a database for storing subscriber related data containing an input/output unit for sending and receiving messages, a processing unit for controlling the database and a storage for storing subscriber related data. The storage of the database is adapted to store information whether a user equipment used by a subscriber belongs to a group of user equipment, for which a preferred access network has been defined.

It is a further object of the invention to provide a network node for performing a subscriber identification analysis. The network node comprises electronic circuitry for determining whether a user equipment belongs to a group of user equipment, for which a preferred access network has been defined.

According to the invention, load based inter-system handover is further developed so that a maximum of services can be provided to a maximum of user equipment. To this end a new indication of user terminals that are preferred at inter-system handover is introduced. According to this indication a selection is performed for inter-system handover, for example at overload condition. User equipment that camps on 3G or camps on 2G, that is user equipment in an idle state is served by a 2G or a 3G access network, is handed over to the respective other network when a service request is received. If use equipment camps on 2G, it will be handed over when it is capable of services provided by 3G only. Such service can be for example high speed data, video or alike. If use equipment camps on 3G, it will preferably handed over if it is capable only of services that can also be provided by 2G like speed or data transmission that does not exceed 2G's capabilities. A device, preferably located in a Core Network decides or indicates to an access network, which at least one user equipment is subject to load balancing and which user equipment should be kept in the access network it is currently located.

To that end differentiation of user equipment is required. It can be done, very similar to Partial Roaming, either with a user identification like the IMSI (International Mobile Subscriber Identification) analysis or with subscriber related data stored in a database like an AAA (Access, Accounting and Authorisation) server, an HLR home location register, or a home subscriber server. Two factors can limit the services provided to user equipment, the subscription and the user equipment capabilities. A subscription can be limited to particular services as well as user equipment capabilities. To indicate that limitation a predefined user identification, for example a certain number range can be used. Alternatively this information can be stored in a database, for example in a transmission permission parameter.

### Brief description of the drawings

The following figures show:
Fig. 1 depicts a flow diagram of a method according to the invention, and
Fig. 2 depicts a device according to the invention.

### Detailed description

In the following the invention will be further described by means of examples and by means of figures.

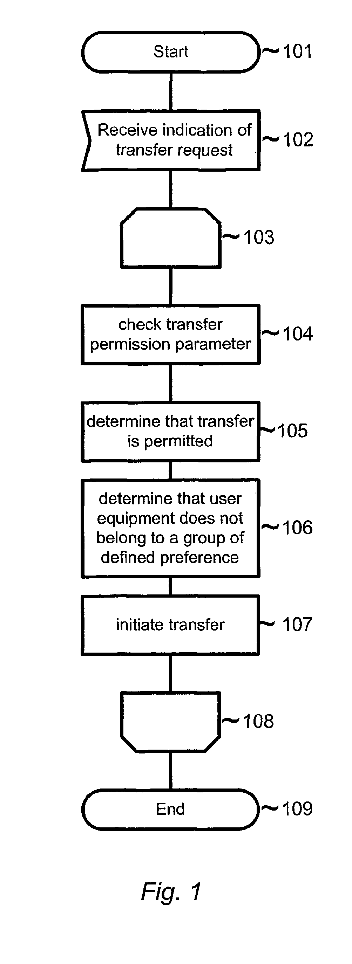

Fig. 1 depicts a flow diagram of a method according to the invention. In a first step 101 the method is started. In a next step 102 an indication of a transfer request is received. Such indication can be for example an operator setting that for any user equipment, or for any user equipment for that a particular service request is received the subsequent steps shall be performed. The indication can also be sent by a node determining a load condition like overload or reaching of a predefined threshold value. A third way of receiving can be a comparison of load at cell level of any higher level of the access networks, wherein the result of the comparison is that user terminal shall be transferred. The next step 103 is the beginning of a loop, this step is optional.

In a following step 104 a transmission permission parameter is checked, whether its value permits the transfer of associated user equipment or not. The transmission permission parameter can be received for example from a database storing subscriber related data or from a network node performing a user identification analysis. In a next step 105 it is determined that a transfer is permitted. In an embodiment of the invention it is implemented that if it is determined that a transfer is not permitted, the method ends. In a preferred embodiment of the invention, at least the following five parameter values are implemented. "GSM restricted", i.e. in Idle and Connected Mode the terminal is not permitted to be served by a GSM network. It should be noted that GSM is still an example for any 2G network. Therefore any other access technology could be used instead of GSM. This applies to the rest of the description, too. The parameter can be used for example for Partial Roaming and Service Handover.

The second parameter value is "WCDMA restricted". This means in Idle and Connected Mode the terminal is not permitted to be served by a WCDMA network. It should be noted that WCDMA is just one example for a 3G access technology, and that any other 3G access technology could be used instead. This applies to the rest of the description, too. The parameter can for example be used for Partial Roaming and Service Handover.

A newly introduced parameter value is "WCDMA Preferred". This value indicates a terminal that may be served in an Idle mode by any of the access networks, but in Connected Mode WCDMA is the preferred technology. User equipment associated to this parameter value are not subject of Partial Roaming. No load based intersystem handovers should be performed. This value is assigned to user equipment capable of services that are supported by the preferred access network but not by the respective other access network, an wherein the a subscriber using that user equipment subscribed to said services.

A further newly introduced parameter value is "GSM Preferred". This means that in an Idle Mode no restriction apply, but in a Connected Mode GSM is the preferred technology. User equipment associated to this parameter value are not subject of Partial Roaming. No load based inter-system handovers should be performed. This value is assigned to user equipment that is not capable of services supported by the respective other access network but not by the indicated one, or wherein the user of the user equipment did not subscribe to such services.

The fifth value is "No Restriction, No Preference". This is, Partial Roaming shall not be performed for these user equipment, but Load Based Inter-systems handovers are permitted.

In a next step 106 it is determined that the user equipment does not belong to a group of terminals for which a preferred access network has been defined. This can be implemented for example by determining that the parameter value is not "GSM preferred" or "WCDMA preferred". In a preferred embodiment of the invention, the steps of determining that a transfer is permitted and determining that the user equipment does not belong to a group of user equipment for which a preferred access network has been defined are executed in a single step.

In a next step 107 the transferring of the user equipment is initiated. This can be implemented for example by sending a message to the access network the user equipment shall be transferred to.

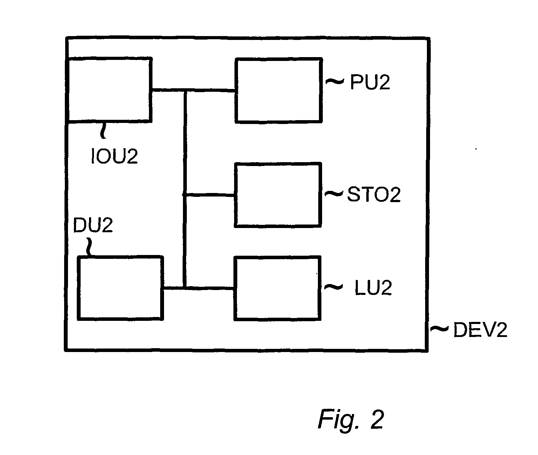

Figure 2 depicts a device according to the invention. The device (DEV2) comprises an input output unit (IOU2) for sending and receiving messages, a processing unit (PU2) for controlling the other units, a storage (ST02), and a determining unit (DU2) for determining whether a transmission of a user equipment is permitted, and a logical unit (LU2) adapted to determine whether a user equipment belongs to a group of user equipment for which a preferred access network has been defined. The units can be implemented by means of software, hardware or a combination of both. In a preferred embodiment of the invention the device is located in a core network node. The device is adapted to perform the method as described for figure 1.

## Claims

1. Method for handling user equipment in a communications network comprising at least a first access network and a second access network for enabling user equipment to access said communications network, wherein the access networks have at least a partially overlapping service area, and wherein user equipment located in a partially overlapping service area can be transferred from the first to the second access network, said method comprising the following steps:
- receiving (102) an indication of a request for transferring at least one user equipment from said first access network to said second access network,
- checking (104) a transfer permission parameter value associated to a user equipment,
- determining (105) that the transfer permission parameter value indicates that a transfer of the associated user equipment is permitted,
- determining (106) that the transfer permission parameter value indicates that the user equipment belongs to a group of user equipment, for which a preferred access network has been defined, and
- initiating (107) based on the determination the transfer of the user equipment from the first to the second access network.

2. Method according to claim 1, wherein an access network operates according to the standards defined for of one of a Global System for Mobile Communications, Wideband Code Division Multiple Access, Code Division Multiple Access, and Enhanced Data Rates for Global System for Mobile Communications Evolution.

3. Method according to claim 1 or 2, wherein the group of user equipment for which a preferred access network has been defined comprises of user equipment with service capabilities limited to services that correspond to services supported by the second network.

4. Method according to claim 1, 2 or 3, wherein the group of user equipment for which a preferred access network has been defined comprises of user equipment used associated to a subscription with permitted services limited to services that correspond to services supported by the second network.

5. Method according to claim 1 or 2, wherein the group of user equipment for which a preferred access network has been defined comprises of user equipment used associated to a subscription for that services are permitted that are not supported by the first network.

6. Method according to claim 1, 2 or 5, wherein the group of user equipment for which a preferred access network has been defined comprises of user equipment with service capabilities corresponding to services that are not supported by the first network.

7. Device (DEV2) for selecting user equipment to be transferred from a first access network to a second access network, comprising
● an input output unit (IOU2) for sending and receiving messages,
● whereby the input output unit (IOU2) is adopted to receive an indication of a request for transferring at least one user equipment from said first access network to said second access network,
● a processing unit (PU2),
● a storage (STO2),
● whereby the storage (STO2) is adapted to store transfer permission parameter value associated to user equipment, and
● a determining unit (DU2) for determining based on a transfer permission parameter value associated to a user equipment whether a transmission of the user equipment is permitted,
● whereby the processing unit (PU2) is adapted to control the other units,
**characterised by**
● a logical unit (LU2) is adapted to determine based on the transfer permission parameter value associated to a user equipment whether the user equipment belongs to a group of user equipment for which a preferred access network has been defined.

8. Device according to claim 7, wherein the logical unit determines whether a user equipment belongs to said group by means of analysing a transfer permission parameter value associated to the user equipment.

9. Database for storing subscriber related data containing
● an input/output unit for sending and receiving messages,
● a processing unit for controlling the database and
● a storage for storing subscriber related data,
**characterised by** that
● the storage is adapted to store information whether a user equipment used by a subscriber belongs to a group of user equipment, for which a preferred access network has been defined, the information being a transfer permission parameter value associated to the user equipment.
10. Network node for performing a subscriber identification analysis, **characterised by** that the network node comprises electronic circuitry for determining based on a transfer permission parameter value associated to a user equipment whether a user equipment belongs to a group of user equipment, for which a preferred access network has been defined.

## Patentansprüche

1. Verfahren zur Handhabung von Benutzereinrichtungen in einem Kommunikationsnetz, das mindestens eine erstes Zugangsnetz und zweites Zugangsnetz umfasst, um für Benutzereinrichtungen Zugang zum Zugangsnetz zu ermöglichen, wobei die Zugangsnetze mindestens einen teilweise überlappenden Versorgungsbereich aufweisen, und wobei Benutzereinrichtungen, die sich in einem teilweise überlappenden Versorgungsbereich befinden, vom ersten an das zweite Zugangsnetz übergeben werden können, wobei das Verfahren die folgenden Schritte umfasst:
- Empfangen (102) einer Anzeige einer Anforderung zur Übergabe mindestens einer Benutzereinrichtung vom ersten Zugangsnetz an das zweite Zugangsnetz,
- überprüfen (104) eines Übergabezulassungsparameterwerts, der mit einer Benutzereinrichtung assoziiert ist,
- Bestimmen (105), dass der Übergabezulassungsparameterwert anzeigt, dass eine Übergabe der assoziierten Benutzereinrichtung zugelassen ist,
- Bestimmen (106), dass der Übergabezulassungsparameterwert anzeigt, dass die Benutzereirichtung zu einer Gruppe von Benutzereinrichtungen gehört, für welche ein bevorzugtes Zugangsnetz definiert wurde, und
- Einleiten (107) basierend auf der Bestimmung der Übergabe der Benutzereinrichtung vom ersten an das zweite Zugangsnetz.

2. Verfahren nach Anspruch 1, wobei ein Zugangsnetz gemäß den Standards arbeitet, die für eines von einem globalen System für Mobilkommunikation, Breitband-Codemultiplexzugang, Codemultiplexzugang und verbesserten Datenraten für globales System für Mobilkommunikation-Evolution definiert sind.

3. Verfahren nach Anspruch 1 oder 2, wobei die Gruppe von Benutzereinrichtungen, für welche ein bevorzugtes Zugangsnetz definiert wurde, Benutzereinrichtungen mit Dienstfähigkeiten umfasst, die auf Dienste beschränkt sind, die Diensten entsprechen, die durch das zweite Netz unterstützt werden.

4. Verfahren nach Anspruch 1, 2 oder 3, wobei die Gruppe von Benutzereinrichtungen, für welche ein bevorzugtes Zugangsnetz definiert wurde, verwendete Benutzereinrichtungen umfasst, die mit einem Abonnement für zugelassene Dienste assoziiert sind, die auf Dienste beschränkt sind, die Diensten entsprechen, die durch das zweite Netz unterstützt werden.

5. Verfahren nach Anspruch 1 oder 2, wobei die Gruppe von Benutzereinrichtungen, für welche ein bevorzugtes Zugangsnetz definiert wurde, verwendete Benutzereinrichtungen umfasst, die mit einem Abonnement für diese zugelassen Dienste assoziiert sind, die durch das erste Netz nicht unterstützt werden.

6. Verfahren nach Anspruch 1, 2 oder 5, wobei die Gruppe von Benutzereinrichtungen, für welche ein bevorzugtes Zugangsnetz definiert wurde, Benutzereinrichtungen mit Dienstfähigkeiten umfasst, die Diensten entsprechen, die durch das zweite Netz nicht unterstützt werden.

7. Vorrichtung (DEV2) zum Auswählen von Benutzereinrichtungen, die von einem ersten Zugangsnetz an zweites Zugangsnetz übergeben werden sollen, umfassend:
● eine Eingabe-/Ausgabeeinheit (IOU2) zum Senden und Empfangen von Nachrichten,
● wobei die Eingabe-/Ausgabeeinheit (IOU2) zum Empfangen einer Anzeige einer Anforderung zur Übergabe mindestens einer Benutzereinrichtung vom ersten Zugangsnetz an das zweite Zugangsnetz ausgelegt ist,
● eine Verarbeitungseinheit (PU2),
● einen Speicher (ST02),
● wobei der Speicher (ST02) zum Speichern von Übergabezulassungsparameterwerten ausgelegt ist, die mit Benutzereinrichtungen assoziiert sind, und
● eine Bestimmungseinheit (DU2) zum Bestimmen basierend auf einem Übergabezulassungsparameterwert, der mit einer Benutzereinrichtung assoziiert ist, ob eine Übergabe der Benutzereinrichtung zugelassen ist,
● wobei die Verarbeitungseinheit (PU2) zum Steuern der anderen Einheiten ausgelegt ist, **gekennzeichnet durch**
● eine logische Einheit (LU2), die so ausgelegt ist, dass sie basierend auf dem Übergabezulassungsparameterwert, der mit einer Benutzereinrichtung assoziiert ist, bestimmt, ob die Benutzereinrichtung zu einer Gruppe von Benutzereinrichtungen gehört, für welche ein bevorzugtes Zugangsnetz definiert wurde.

8. Vorrichtung nach Anspruch 7, wobei die logische Einheit durch Analysieren eines Übergabezulassungsparameterwerts, der mit der Benutzereinrichtung assoziiert ist, bestimmt, ob eine Benutzereinrichtung zur Gruppe gehört.

9. Datenbank zum Speichern Von teilnehmerbezogenen Daten, enthaltend:
● eine Eingabe-/Ausgabeeinheit zum Senden und Empfangen von Nachrichten,
● eine Verarbeitungseinheit zum Steuern der Datenbank und
● einen Speicher zum Speicher von teilnehmerbezogenen Daten,
**dadurch gekennzeichnet, dass**
● der Speicher so ausgelegt ist, dass er Informationen, ob eine Benutzereinrichtung, die durch einen Teilnehmer verwendet wird, zu einer Gruppe von Benutzereinrichtungen gehört, für welche ein bevorzugtes Zugangsnetz definiert wurde, wobei es sich bei den Informationen um einen Übergabezulassungsparameterwert handelt, der mit der Benutzereinrichtung assoziiert ist.

10. Netzknoten zum Durchführen einer Teilnehmeridentifikationsanalyse, **dadurch gekennzeichnet, dass** der Netzknoten eine elektronische Schaltungsanordnung zum Bestimmen, ob eine Benutzereinrichtung zu einer Gruppe von Benutzereinrichtungen gehört, für welche ein bevorzugtes Zugangsnetz definiert wurde, basierend auf einem Übergabezulassungsparameterwert umfasst, der mit einer Benutzereinrichtung assoziiert ist.

## Revendications

1. Procédé de gestion d'un équipement d'utilisateur dans un réseau de communications comprenant au moins un premier réseau d'accès et un second réseau d'accès pour permettre à un équipement d'utilisateur d'accéder audit réseau de communications, dans lequel les réseaux d'accès ont au moins une zone de desserte se superposant partiellement, et dans lequel l'équipement d'utilisateur situé dans une zone de desserte se superposant partiellement peut être transféré du premier au second réseau d'accès, ledit procédé comprenant les étapes suivantes :
- recevoir (102) une indication d'une demande de transfert d'au moins un équipement d'utilisateur depuis ledit premier réseau d'accès vers ledit second réseau d'accès,
- vérifier (104) une valeur de paramètre de permission de transfert associée à un équipement d'utilisateur,
- déterminer (105) que la valeur de paramètre de permission de transfert indique qu'un transfert de l'équipement d'utilisateur associé est permis,
- déterminer (106) que la valeur de paramètre de permission de transfert indique que l'équipement d'utilisateur appartient à un groupe d'équipements d'utilisateur, pour lequel un réseau d'accès préféré a été défini, et
- amorcer (107) sur la base de la détermination le transfert de l'équipement d'utilisateur du premier au second réseau d'accès.

2. Procédé selon la revendication 1, dans lequel un réseau d'accès fonctionne selon les normes définies pour un d'un système mobile de communications mobiles, un accès multiple par répartition de code large bande, un accès multiple par répartition de code et un système EDGE (Enhanced Data Rates for Global System for Mobile Communications Evolution).

3. Procédé selon les revendications 1 ou 2, dans lequel le groupe d'équipements d'utilisateurs pour lequel un réseau d'accès préféré a été défini comprend un équipement d'utilisateur avec des capacités de desserte limitées aux services qui correspondent aux services pris en charge par le second réseau.

4. Procédé selon les revendications 1,2 ou 3, dans lequel le groupe d'équipements d'utilisateurs pour lequel un réseau d'accès préféré a été défini comprend un équipement d'utilisateur utilisé associé à un abonnement avec des services autorisés limités aux services qui correspondent aux services pris en charge par le second réseau.

5. Procédé selon les revendications 1 ou 2, dans lequel le groupe d'équipements d'utilisateurs pour lequel un réseau d'accès préféré a été défini comprend un équipement d'utilisateur utilisé associé à un abonnement aux services autorisés qui ne sont pas pris en charge par le premier réseau.

6. Procédé selonles revendications 1,2 ou 5, dans lequel le groupe d'équipements d'utilisateurs pour lequel un réseau d'accès préféré a été défini comprend un équipement d'utilisateur avec des capacités de desserte correspondant aux services qui ne sont pas pris en charge par le premier réseau.

7. Dispositif (DEV2) pour sélectionner un équipement d'utilisateur à transférer d'un premier réseau d'accès à un second réseau d'accès, comprenant :
● une unité d'entrée/sortie (IOU2) pour envoyer et recevoir des messages,
● moyennant quoi l'unité d'entrée/sortie (IOU2) est adaptée pour recevoir une indication d'une demande de transfert d'au moins un équipement d'utilisateur depuis ledit premier réseau d'accès vers ledit second réseau d'accès,
● une unité de traitement (PU2),
● une mémoire (ST02),
● moyennant quoi la mémoire (ST02) est adaptée pour mémoriser une valeur de paramètre de permission de transfert associée à un équipement d'utilisateur, et
● une unité de détermination (DU2) pour déterminer sur la base d'une valeur de paramètre de permission de transfert associée à un équipement d'utilisateur si une transmission de l'équipement d'utilisateur est autorisée,
● moyennant quoi l'unité de traitement (PU2) est adaptée afin de commander les autres unités, **caractérisé par**
● une unité logique (LU2) adaptée afin de déterminer sur la base de la valeur de paramètre de permission de transfert associée à un équipement d'utilisateur si l'équipement d'utilisateur appartient à un groupe d'équipements d'utilisateurs pour lequel un réseau d'accès préféré a été défini.

8. Dispositif selon la revendication 7, dans lequel l'unité logique détermine si un équipement d'utilisateur appartient audit groupe au moyen de l'analyse d'une valeur de paramètre de permission de transfert associée à l'équipement d'utilisateur.

9. Base de données pour mémoriser des données relatives à l'abonné contenant ;
● une unité d'entrée/sortie pour envoyer et recevoir des messages,
● une unité de traitement pour commander la base de données et
● une mémoire pour mémoriser des données relatives à l'abonné, **caractérisé en ce que**
● la mémoire est adaptée afin de mémoriser des informations indiquant si un équipement d'utilisateur utilisé par un abonné appartient à un groupe d'équipements d'utilisateurs, pour lequel un réseau d'accès préféré a été défini, l'information étant une valeur de paramètre de permission de transfert associée à l'équipement d'utilisateur.

10. Noeud de réseau pour effectuer une analyse d'identification d'abonné, **caractérisé en ce que** le noeud de réseau comprend des circuits électroniques pour déterminer sur la base d'une valeur de paramètre de permission de transfert associée à un équipement d'utilisateur si un équipement d'utilisateur appartient à un groupe d'équipements d'utilisateurs pour lequel un réseau d'accès préféré a été défini.
